# EUROPEAN PATENT APPLICATION

(11) **EP 0 552 660 A1**
(43) Date of publication of application: **28.07.1993**
(21) Application number: 93100408.9
(22) Date of filing: 13.01.1993
(51) Int. Cl.: B01D 53/34

(54) **Process for the purification of waste gases emitted from melting furnaces**

(30) Priority: 20.01.1992 IT MI920088
(71) Applicant: AVIR FINANZIARIA S.p.A., I-14100 Asti (IT)
(72) Inventor: Ercole, Pietro, I-14100 Asti (IT)
(74) Representative: Giambrocono, Alfonso, Dr. Ing.

(57) **Abstract**

Improvement of the process of abatment of pollutants present in waste gases emitted from melting furnaces for the production of glass, consisting in the fact that, during the cooling carried out by quenching with water, conditions are created favorable to oxidation of present SO₂ and to form stable Na₂SO₃, during the filtration, to absorption of SO₃ and SO₂ on the cake of sodium sulfate present on the filter.

## Description

European Patent 0 395 789 filed June 5, 1989, claims a process for the purification of waste gases emitted from melting furnaces for the production of glass, particularly of soda-lime glass, characterized in that hot waste gases are employed to pre-heat the glass cullet fed to the furnace. Waste gases emitted from melting furnaces at the lowest temperature caused by the efficiency of the air pre-heating system with which the furnace is provided, and the percentage of glass cullet in respect to the worked glass, must anyway be cooled by adjusting the temperature at a degree compatible with the kind of tissue used for preparing the filter bag for the powder absorption. This operation is carried out in an apparatus in which cooling ("quenching") is obtained containing the still hot gases, emitted from the cullet pre-heater, with water.

Actually, the conversion of water to vapor allows to subtract heat to the gases facilitating their cooling and limiting their dilution. In this way the flow rate of gases to the filter, also in view of the volume decrease caused by the temperature lowering, is decreased, and the separation of the powders by filtration may be effected on filters having acceptable surfaces.

One feature claimed in European Patent 0 395 789 concerns the chemical absorption of SO₃ present in waste gases by the sodium sulfate constituting the majority of the powders in the waste gases emitted from melting furnaces for the production of soda-lime glass. This occurs at the filtration temperature (between 185 and 195°C) at which sodium pyrosulfate is thermodynamically stable, according to the equation

Na₂SO₄ + SO₃ → Na₂S₂O₇

This reaction may occur only at the expenses of the SO₃, which represents a minor portion of the SOₓ (SO₂+SO₃) contained in the waste gases. In fact, a series of analyses carried out on gases emitted from melting furnaces for soda-lime glasses gave the following results:

| Test No. | SO₂ concentr. mg/Nm³ | SO₃ concentr. mg/Nm³ | SO₃ - x 100 SO₂ + SO₃ |
|---|---|---|---|
| 1 | 1346 | 10.4 | 0.767 |
| 2 | 930 | 11.3 | 1.200 |
| 3 | 946 | 11.3 | 1.180 |
| 4 | 1292 | 14.7 | 1.125 |
| 5 | 1022 | 12.9 | 1.246 |

This situation does not permit to fully utilize the invention of the mentioned European Patent, inasmuch at the moment at which the gases pass through the panel present on the filter bag, the SO₃ absorbed by the sodium sulfate to generate sodium pyrosulfate is present in very low amounts and concentrations.

Although, as a consequence of the absorption, a part of SO₂ will be converted into SO₃ to reestablish the equilibrium conditions, this conversion, at a temperature of 180-190°C, will occur with such slow kinetics that it will require a time longer than the time necessary for the gases to go through the sodium sulfate panel present on the filter bag.

This means, in other terms, that the amount of SO₃ to be reproduced for creating again the equilibrium conditions will be formed at the expenses of the SO₂ prevailingly when the gases will no longer be in contact with the sodium sulfate present on the filter, and the chemical and physical conditions permitting the absorption on the sodium sulfate present on the surface of the filter bag will no longer be present.

The chemical reactions by which the invention of the mentioned European Patent can work are the following ones:
First, the SO₂ constituting 98 percent or more of the SO_{X} present in the gases must be converted into SO₃:

1) 2SO₂ + O₂ → 2SO₃

Then when the gases come into contact with the sodium sulfate present on the filter at the temperature of 180-200°C:

2) Na₂SO₄ + SO₃ → Na₂S₂O₇

and afterwards, due to the working temperature and to the molar fraction of water present in the gases:

3) Na₂S₂O₇ + H₂O → 2NaHSO₄

The above reported formulas and reactions show that in order to enhance the effect of the SO_{X} abatment it is necessary to find conditions allowing to shift toward right in desirably short times the SO₂ oxidation equilibrium (reaction 1). This is, in fact, the condition necessary for utilizing the mechanism of reaction 2 which blocks, in the form of a solid, also that portion of SO_{X} which is present in the form of SO₃ upward the filter bag.

Once the above discussed difficult problem is overcome, it may be necessary to study tricks in order to create on the filter the stoichiometric and thermodynamic conditions for blocking in the form of sodium pyrosulfate all the SO₃ formed.

This problem, much less difficult, may be solved either by adjusting the ratio between the Na₂SO₄ and the SO₃ moles so that the Na₂SO₄ is in excess, or establishing on the filter temperature conditions allowing to obtain formation of sodium trisulfate Na₂S₃0₁₀, or adjusting the working conditions of the filter so as to utilize both the above described effects, obviously in an approximate way only.

We have found and shown that not only is it possible to influence in surprisingly favorable terms the oxidation reaction of SO₂ to SO₃ (reaction 1), but also to do this by appropriately utilizing the step of cooling with water ("quenching") which represents a part of the cycle of preparation of the waste gases, to render them thermically compatible with the filter bag described and claimed in European Patent 0 395 789.

A systematical experimentation was carried out in a pilot plant in order to ascertain the influence of the working conditions of this important step of the abatment cycle on the kinetics of the oxidation of SO₂ to SO₃. The experimentation was made to verify whether the presence in the media of a higher amount of polar substances (increase of the molar fraction of water) and/or the addition of substances with higher polarity (f.i. sodium hydroxide, sodium sulfate, calcium hydroxide), might catalize the conversion of SO₂ to SO₃. It is known that this conversion is kinetically very slow in a gaseous medium having a comparatively low temperature (180-200°C) and in which the SO_{X} concentration is low (such as some thousand mg/Nm³).

The experiments were carried out using a pilot plant composed by a burner having the task to generate the gases by combustion of methane; the gases were then thermally adjusted by the addition of hot air to bring them to the temperature they will reach in the industrial plant at the exit of the glass cullet pre-heater under the less favorable conditions (410°C).

To the thus prepared gases was added an amount of SO₂ sufficient to establish a concentration of about 1000-1200 mg/Nm³.

The gases were then subjected to chemical analysis and, after having determined their temperature, they were sent to the "quenching" step in which the controlled cooling to the temperature of 200°C was effected to study the kinetics of oxidation of SO₂ to SO₃ after addition of water alone or a suspension of calcium hydroxide or a solution of sodium hydroxide or a solution of sodium sulfate.

At the end of this step, on the cold gases the temperature and the chemical composition were again determined in order to ascertain the effectiveness of the plant from the thermic point of view and to establish the influence of the adopted conditions on the SO₃ formation. The addition of alkaline substances as sodium hydroxide and calcium hydroxide had two scopes: to subtract to the equilibrium, by formation respectively of sodium sulfate and calcium sulfate, the SO₃ present and to generate the polarity conditions apt to promote the kinetics of oxidation of SO₂ to SO₃. Finally, the thus treated gases were sent to a bag filter having the scope of separating the solids formed during the "quenching" step: i.e. sodium sulfate and/or calcium sulfate.

It was noted that the presence of SO₂ in the gases discharged into the atmosphere from the melting furnaces may cause formation of sodium dithionate and/or sodium sulfite. These salts may be formed by the effect of the chemical absorption of SO₂ on sodium sulfate, according to the following reaction:

Na₂SO₄ + SO₂ → Na₂S₂O₆

and when NaOH is employed in the "quenching" step, according to the equation:

2NaOH + SO₂ → Na₂SO₃ + H₂O

Obviously the two mechanisms, like the above described one leading to the formation of pyrosulfate, may also occur during the filtration and the quenching step.

It is apparent that also the formation of sodium dithionate and sodium sulfite contributes to the decrease of the SO_{X} concentration in the gases which, after the filtration, will be discharged into the atmosphere.

Moreover it is to be taken into account that the tetravalent sulfur present in sodium dithionate and sodium sulfite does not display, during the working of the glass, neither the oxidizing nor the refining effect.

In fact, the above mentioned salts, heing stable at the filtration temperature (170-190°C), are no longer stable under the temperature conditions existing in the furnace, which cause the rapid cleaving into Na₂SO₄ and SO₂ in the case of dithionate and into Na₂O and SO₂ in the case of sulfite. The SO₂ present in powders will therefore go back to the gases emitted from the furnace and, thus, to the abatment plant.

Powders containing substantial amounts of dithionate and/or sulfite, although they may be re-used as such as components of the vitrifiable mixture, may cause working problems, and their effectiveness as refining and oxidizing components is lower when their percentage of combined SO₂ is higher.

The above problems may be solved by submitting the powders to an oxidation treatment in an alkaline medium (NaOH) converting the mentioned compounds into sodium sulfate according to the following reactions:

2Na₂S₂O₆ + 4NaOH + O₂ → 4Na₂SO₄ + 2H₂O

2Na₂SO₃ + O₂ → 2Na₂SO₄

The technological problems due to the necessity of oxidizing sulfite may, however, be avoided when the combined SO₂ is contained in powders abated to less of 25% in weight.

In this case, the reducing effect of tetravalent sulfur must be considered in the preparation of the vitrifiable mixture by taking off an appropriate amount of the reducing agents present in the mixture.

The results obtained in the experiments enlarge surprisingly the field of working conditions under which it is possible to utilize the property of sodium sulfate to adsorb under appropriate physical and thermal conditions, during the filtration, both SO₂ and SO₃.

In fact, by effecting the thermoregulation of gases by feeding to the "quencher" of a diluted water solution of sodium hydroxide or, alternatively, of a strong electrolyte the oxidation reaction of SO₂ to SO₃ is surprisingly favored.

By adopting these conditions, during the filtration of the gases, the pyrosulfate will be formed prevailingly which, undergoing the hydrolysis, will allow to recycle to the furnace powders formed mainly by sodium sulfate and bisulfate and having an acceptable percentage of combined SO₂ in the form of dithionate and/or sulfite (lower than 15%).

It is also possible to feed to the "quenching" pure water, i.e. in the absence of those basic substances which favor the oxidation of SO₂ to SO₃ and, obviously, cause the partial neutralization of the produced SO₃ by formation of sodium sulfate.

By working under these conditions, the powders discharged from the filter may be recycled to the filter as such or, alternatively, they may be brought into aqueous suspension with NaOH to facilitate transport.

The obtained suspension may by added to the vitrifiable mixture and recycled to the furnace, thus overcoming all problems connected with recycling the powders as such.

The following examples illustrate the invention without, however, establishing its limits.

### Example 1

Waste gases produced by combustion of natural gas, after the addition of SO₂ from a cylinder and of air to reach the temperature of 410°C showed the following chemical composition:

| | |
|---|---|
| SO₂ | 1346.0 mg/Nm³ |
| SO₃ | 10.4 mg/Nm³ |
| NO_{X} | 27.9 mg/Nm³ |
| O₂ | 17.0% in volume |

The gases were submitted to "quenching" operations with an amount of water sufficient to decrease the gases temperature to 200°C.

Chemical analysis of the gases after this step was the following:

| | |
|---|---|
| SO₂ | 1252.0 mg/Nm³ |
| SO₃ | 79.2 mg/Nm³ |
| NO_{X} | 28.9 mg/Nm³ |
| O₂ | 18.3% in volume |

After the filtration step the analysis of the gases to be discharged gave:

| | |
|---|---|
| SO₂ | 1244.0 mg/Nm³ |
| SO₃ | 22.4 mg/Nm³ |
| NO_{X} | 28.0 mg/Nm³ |
| O₂ | 19,7% in volume |

### Example 2

Waste gases produced by combustion of natural gas, after the addition of SO₂ and air to reach the temperature of 410°C, showed the following composition:

| | |
|---|---|
| SO₂ | 969.0 mg/Nm³ |
| SO₃ | 10.5 mg/Nm³ |
| NO_{X} | 30.8 mg/Nm³ |
| O₂ | 17.8% in volume |

After the "quenching" step with water in an amount sufficient to bring the temperature to 200°C and with a specific load of the apparatus lower by 20% as compared to example 1, the chemical analysis of the gases was the following:

| | |
|---|---|
| SO₂ | 864.0 mg/Nm³ |
| SO₃ | 90.0 mg/Nm³ |
| NO_{X} | 33.8 mg/Nm³ |
| O₂ | 18.9% in volume |

After the filtration the analysis of the gases to be discharged gave:

| | |
|---|---|
| SO₂ | 739.0 mg/Nm³ |
| SO₃ | 10.0 mg/Nm³ |
| NO_{X} | 35.0 mg/Nm³ |
| O₂ | 19.1% in volume |

### Example 3

Waste gases produced by combustion of natural gas after the addition of SO₂ and air to obtain the temperature of 410°C showed the following composition:

| | |
|---|---|
| SO₂ | 930.0 mg/Nm³ |
| SO₃ | 11.3 mg/Nm³ |
| NO_{X} | 29.7 mg/Nm³ |
| O₂ | 17,7% in volume |

After the "quenching" step carried out here by the addition of a diluted water solution of caustic soda in such an amount to stoichiometrically correspond to the previously added SO₂, to bring the gases temperature to 200°C, and adjusting the specific load of the apparatus to the one used in example 1, the chemical analysis of the gases was found to be:

| | |
|---|---|
| SO₂ | 438.7 mg/Nm³ |
| SO₃ | 238.0 mg/Nm³ |
| NO_{X} | 15.3 mg/Nm³ |
| O₂ | 18.8% in volume |

After the filtration, analysis of the gases to be discharged into the atmosphere gave:

| | |
|---|---|
| SO₂ | 405.8 mg/Nm³ |
| SO₃ | 35.0 mg/Nm³ |
| NO_{X} | 20.6 mg/Nm³ |
| O₂ | 19.0% in volume |

### Example 4

Waste gases produced by the combustion of natural gas after the addition of SO₂ and air to obtain the temperature of 410°C, showed the following chemical composition:

| | |
|---|---|
| SO₂ | 940.0 mg/Nm³ |
| SO₃ | 12.0 mg/Nm³ |
| NO_{X} | 26.0 mg/Nm³ |
| O₂ | 17.4% in volume |

After the "quenching" step effected by feeding a diluted water solution of caustic soda in such an amount to introduce sodium hydroxide in a quantity double in respect to the one stoichiometrically corresponding to the charged SO₂ and to bring the gases temperature to 200° and with a specific load of the apparatus corresponding to the one adopted in example 1, the analysis of the gases gave the following results:

| | |
|---|---|
| SO₂ | 273.0 mg/Nm³ |
| SO₃ | 168.0 mg/Nm³ |
| NO_{X} | 10.3 mg/Nm³ |
| O₂ | 18.6% in volume |

After the filtration no gas analysis was made.

### Example 5

Waste gases produced by the combustion of natural gas after addition SO₂ and air to obtain the temperature of 410°C showed the following chemical composition:

| | |
|---|---|
| SO₂ | 946.0 mg/Nm³ |
| SO₃ | 11.3 mg/Nm³ |
| NO_{X} | 26.7 mg/Nm³ |
| O₂ | 17.6% in volume |

After the "quenching" step effected by feeding a dilute aqueous solution of caustic soda in such an amount to provide 50 percent of sodium hydroxide stoichiometrically corresponding to the added SO₂ and to bring the temperature to 200°C and adopting a specific apparatus load like the one adopted in example 1, the gas analysis gave:

| | |
|---|---|
| SO₂ | 672.0 mg/Nm³ |
| SO₃ | 98.5 mg/Nm³ |
| NO_{X} | 20.5 mg/Nm³ |
| O₂ | 18.8% in volume |

After the filtration, analysis of the gases to be discharged into the atmosphere gave:

| | |
|---|---|
| SO₂ | 657.0 mg/Nm³ |
| SO₃ | 15.8 mg/Nm³ |
| NO_{X} | 26.8 mg/Nm³ |
| O₂ | 19.1% in volume |

### Example 6

Waste gases produced by combustion of natural gas, after the addition of SO₂ and air to obtain the temperature of 325°C, showed the following chemical analysis:

| | |
|---|---|
| SO₂ | 1292.0 mg/Nm³ |
| SO₃ | 14.7 mg/Nm³ |
| NO_{X} | 35.0 mg/Nm³ |
| O₂ | 18.5% in volume |

After the "quenching" step effected by feeding a dilute aqueous solution of caustic soda in such an amount to provide 50 percent of the NaOH stoichiometrically corresponding to the added SO₂ and to bring the temperature to 200°C and adopting a specific load of the apparatus as in example 1, the analysis of gases was as follows:

| | |
|---|---|
| SO₂ | 906.0 mg/Nm³ |
| SO₃ | 98.8 mg/Nm³ |
| NO_{X} | 28.4 mg/Nm³ |
| O₂ | 19.5% in volume |

After the filtration the analysis of the gases to be discharged into the atmosphere was:

| | |
|---|---|
| SO₂ | 842.0 mg/Nm³ |
| SO₃ | 29.5 mg/Nm³ |
| NO_{X} | 24.8 mg/Nm³ |
| O₂ | 19.7% in volume |

### Example 7

Waste gases produced by the combustion of natural gas, after the addition of SO₂ and air to obtain the temperature of 410°C, showed the following chemical analysis:

| | |
|---|---|
| SO₂ | 1022.0 mg/Nm³ |
| SO₃ | 12.9 mg/Nm³ |
| NO_{X} | 28.1 mg/Nm³ |
| O₂ | 17.3% in volume |

After the "quenching" step effected by feeding a dilute aqueous solution of sodium sulfate in such an amount to provide a number of Na₂SO₄ moles like that of added SO₂ and to bring the temperature to 200°C and to adopt a specific load of the apparatus as in example 1, the analysis of gases was as follows:

| | |
|---|---|
| SO₂ | 890.0 mg/Nm³ |
| SO₃ | 79.0 mg/Nm³ |
| NO_{X} | 26.6 mg/Nm³ |
| O₂ | 18.5% in volume |

After the filtration, analysis of the gases to be discharged into the atmosphere gave:

| | |
|---|---|
| SO₂ | 861.0 mg/Nm³ |
| SO₃ | 16.8 mg/Nm³ |
| NO_{X} | 28.2 mg/Nm³ |
| O₂ | 19.0% in volume |

### Example 8

Waste gases produced by combustion of natural gas after the addition of SO₂ and air to obtain the temperature of 404°C showed the following chemical composition.:

| | |
|---|---|
| SO₂ | 1090.0 mg/Nm³ |
| SO₃ | 12.0 mg/Nm³ |
| NO_{X} | 37.2 mg/Nm³ |
| O₂ | 17.9% in volume |

After the "quenching" step effected here by the addition of a dilute aqueous suspension of calcium hydroxide (Ca(OH)₂) in such an amount to stoichiometrically sorrespond to the previously added SO₂ and to bring the temperature of gases to 200°C and working with a specific load of the apparatus like that adopted in example 1, the analysis of gases gave the following results:

| | |
|---|---|
| SO₂ | 926.0 mg/Nm³ |
| SO₃ | 54.8 mg/Nm³ |
| NO_{X} | 38.3 mg/Nm³ |
| O₂ | 19.1% in volume |

After filtration, analysis of the waste gases to be discharged into the atmosphere gave:

| | |
|---|---|
| SO₂ | 826.0 mg/Nm³ |
| SO₃ | n.d. |
| NO_{X} | 37.1 mg/Nm³ |
| O₂ | 19.2% in volume |

### Example 9

Waste gases produced by combustion of natural gas after the addition of SO₂ and air to obtain the temperature of 404°C showed the following chemical composition:

| | |
|---|---|
| SO₂ | 1002.0 mg/Nm³ |
| SO₃ | 12.0 mg/Nm³ |
| NO_{X} | 31.5 mg/Nm³ |
| O₂ | 17.5% in volume |

After the "quenching" step effected by the addition of a dilute aqueous suspension of calcium hydroxide (Ca(OH)₂) in an amount corresponding to twice the stoichiometric amount of added SO₂ and to bring the temperature of gases to 200°C and working with a specific load of the apparatus like that adopted in example 1, the analysis of gases gave:

| | |
|---|---|
| SO₂ | 780.0 mg/Nm³ |
| SO₃ | 40.9 mg/Nm³ |
| NO_{X} | 24.3 mg/Nm³ |
| O₂ | 18.7% in volume |

After filtration, analysis of gases to be discharged into the atmosphere gave:

| | |
|---|---|
| SO₂ | 734.0 mg/Nm³ |
| SO₃ | 17.4 mg/Nm³ |
| NO_{X} | 25.6 mg/Nm³ |
| O₂ | 18.9% in volume |

### Example 10

In order to establish that the oxidation of SO₂ to SO₃ was not favored by the strong mass action caused by high molar O₂ concentration, in turn due to the necessity of bringing the gases temperature to a level similar to the temperature which will be reached in industrial plant downward the cullet pre-heater by the addition of cold water, a test was performed by repeating the conditions of example 3 ("quenching" with dilute aqueous caustic soda solution in an amount stoichimetrically corresponding to the SO₂ previously added to the gases), checking, however, the dilution with air in order to obtain a percentage of O₂ in the gases fed to the "quenching" between 8 and 10%, i.e. within the range to be used in the industrial plant.

Dilution with less air in respect to the preceding examples implies the use of more water than in example 4, to obtain, at the exit of the "quenching", the temperature of the gases necessary for feeding the bag filter (200°C).

Analysis of gases before the "quenching" gave:

| | |
|---|---|
| SO₂ | 980.0 mg/Nm³ |
| SO₃ | 15.0 mg/Nm³ |
| NO_{X} | 30.0 mg/Nm³ |
| O₂ | 9.8% in volume |

After the "quenching" step effected with an addition of aqueous NaOH in an amount to decrease the temperature of the gases from 580°C to 200°C, the analysis of gases was as follows:

| | |
|---|---|
| SO₂ | 450.0 mg/Nm³ |
| SO₃ | 251.0 mg/Nm³ |
| NO_{X} | 15.0 mg/Nm³ |
| O₂ | 10% in volume |

After the filter, the composition of the gases to be discharged into the atmosphere was:

| | |
|---|---|
| SO₂ | 410.0 mg/Nm³ |
| SO₃ | 30.0 mg/Nm³ |
| NO_{X} | 21.0 mg/Nm³ |
| O₂ | 10.1% in volume |

The following three examples concern a second series of tests having the scope to ascertain the actual possibility of converting the free SO₂ present in gases, into compounds such as sodium dithionate and sulfite, these last substances being separable by filtration.

This experimentation was carried out in a prototype of industrial plant connected with a melting furnace for the production of soda-lime glass.

### Example 11

To the waste gas produced by combustion of natural gas and containing the usual polluting substances present in the emissions of melting furnaces for soda-lime glasses (SO_{X}, NO_{X}, powders), air was added in order to decrease their temperature to 450°C.

Their chemical composition was:

| | |
|---|---|
| SO₂ | 970.0 mg/Nm³ |
| SO₃ | 13.5 mg/Nm³ |
| NO_{X} | 1600.0 mg/Nm³ |
| Powders | 330.0 mg/Nm³ |
| O₂ | 9.5% in volume |

After the "quenching" step effected by feeding an amount of water sufficient to bring the temperature of the waste gases to 190°C, their analysis put into evidence to following situation:

| | |
|---|---|
| SO₂ | 810.0 mg/Nm³ |
| SO₃ | 90.0 mg/Nm³ |
| NO_{X} | 1560.0 mg/Nm³ |
| Powders | 365.0 mg/Nm³ |
| O₂ | 10.1% in volume |

After filtration the composition of waste gases emitted into the atmosphere was:

| | |
|---|---|
| SO₂ | 782.0 mg/Nm³ |
| SO₃ | 18.0 mg/Nm³ |
| NO_{X} | 1560.0 mg/Nm³ |
| Powders | 8.0 mg/Nm³ |
| O₂ | 10.5% in volume |

Chemical analysis on the powders separated from the bag filter showed the following components:

| | |
|---|---|
| Sodium sulfate | 85.0% |
| Calcium sulfate | 5.0% |
| Potassium sulfate | 6.0% |
| Sodium dithionate + sulfite | 2.0% |
| Others | 2.0% |

This experimentation was carried out in a prototype of industrial plant connected with a melting furnace for the production of soda-lime glass.

### Example 12

To the waste gas produced by combustion of natural gas and containing the usual polluting substances present in the emission of melting furnaces for soda-lime glasses (SO₂, NO_{X}, powders), air was added in order to decrease their temperature to 450°C.

Their chemical composition was:

| | |
|---|---|
| SO₂ | 1013.0 mg/Nm³ |
| SO₃ | 10.8 mg/Nm³ |
| NO_{X} | 1380.0 mg/Nm³ |
| Powders | 350.0 mg/Nm³ |
| O₂ | 8.6% in volume |

After the "quenching" operation effecting by adding a dilute NaOH aqueous solution in an amount stoichiometrically corresponding to the SO₂ present in the waste gases and to bring their temperature to 190°C, the chemical analysis gave:

| | |
|---|---|
| SO₂ | 630.0 mg/Nm³ |
| SO₃ | 200.0 mg/Nm³ |
| NO_{X} | 1510.0 mg/Nm³ |
| Powders | 1220.0 mg/Nm³ |
| O₂ | 9.5% in volume |

After filtration the emitted waste gases had the following composition:

| | |
|---|---|
| SO₂ | 480.0 mg/Nm³ |
| SO₃ | 23.0 mg/Nm³ |
| NO_{X} | 1580.0 mg/Nm³ |
| Powders | 6.0 mg/Nm³ |
| O₂ | 9.9% in volume |

Analysis of powders collected on the filter gave these results:

| | |
|---|---|
| Sodium sulfate | 75.0% |
| Calcium sulfate | 4.0% |
| Potassium sulfate | 7.0% |
| Sodium dithionate + sulfite | 9.0% |
| Others | 5.0% |

This experimentation was carried out in a prototype of industrial plant connected with a melting furnace for the production of soda-lime glass.

### Example 13

To the waste gas produced by combustion of natural gas and containing the usual polluting substances present in the emissions of melting furnaces for soda-lime glasses (SO₂, NO_{X}, powders), air was added in order to decrease their temperature to 450°C.

Their chemical composition was:

| | |
|---|---|
| SO₂ | 1156.0 mg/Nm³ |
| SO₃ | 12.6 mg/Nm³ |
| NO_{X} | 1583.0 mg/Nm³ |
| Powders | 323.0 mg/Nm³ |
| O₂ | 7.9% in volume |

After the "quenching" step effected with a dilute aqueous solution of caustic soda (NaOH) in an amount twice the one stoichiometrically corresponding to the present SO₂ and to decrease, at the same time, the temperature of gases to 190°C, the analysis of these latter gave the following values:

| | |
|---|---|
| SO₂ | 411.0 mg/Nm³ |
| SO₃ | 340.0 mg/Nm³ |
| NO_{X} | 1661.0 mg/Nm³ |
| Powders | 1819.0 mg/Nm³ |
| O₂ | 8.8% in volume |

The chemical composition of gases as determined after the bag filter was:

| | |
|---|---|
| SO₂ | 306.0 mg/Nm³ |
| SO₃ | 27.0 mg/Nm³ |
| NO_{X} | 1627.0 mg/Nm³ |
| Powders | 9.0 mg/Nm³ |
| O₂ | 9.4% in volume |

The analysis of powders revealed the presence of the following components:

| | |
|---|---|
| Sodium sulfate | 72.0% |
| Calcium sulfate | 4.5% |
| Potassium sulfate | 7.5% |
| Sodium dithionate + sulfite | 13.0% |
| Others | 3.0% |

This experimentation was carried out in a prototype of industrial plant connected with a melting furnace for the production of soda-lime glass.

## Claims

1. Process for the purification of waste gases emitted from melting furnaces for the production of glass, containing SO₂ and SO₃, characterized in that during the step of cooling the gases carried out by quenching, conditions are created favorable to the oxidation of SO₂ to SO₃ and the subsequent adsorption of SO₃ on the sodium sulfate cake present on the filter through which the waste gases are passed.

2. A process according to claim 1 characterized in that a portion of the SO₂ present in the waste gases is converted either during the quenching or during the filtration, into sodium sulfite and/or sodium dithionate, both easily separable by filtration.

3. A process according to claim 1, carried out on waste gases emitted from melting furnaces for the production of soda-lime glass.

4. Process according to claims 1 to 3, characterized in that the waste gas cooling is carried out by the quenching feeding of a dilute aqueous sodium hydroxide solution having the appropriate concentration to obtain the desired cooling and to use such an amount of sodium hydroxide to obtain a ratio between the moles of sodium hydroxide and the moles of SO₂ and SO₃ ranging between 0.1 and 2.5.

5. A process according to claims 1 to 3, characterized in that sodium hydroxide, besides acting as neutralizing agent in respect of SO₂ + SO₃, promotes the oxidation reaction of SO₂ to SO₃ and allows to reach, depending of the number of employed sodium hydroxide moles, concentrations of free SO₃ in respect of the sum free SO₂/free SO₃ between 8% and 50%.

6. A process according to claim 1 to 3, wherein the promotion of the reaction of oxidation of SO₂ to SO₃ is obtained by using calcium hydroxide in a ratio between calcium hydroxide moles and SO₂ + SO₃ moles ranging between 0.1 and 1.5%.

7. A process according to claims 1 to 6 wherein the promotion of the reaction of oxidation of SO₂ to SO₃ is obtained by using sodium sulfate in a ratio between sodium sulfate moles and SO₂ + SO₃ moles ranging between 0.1 amd 5.0%.

8. A process according to claims 1 to 7 wherein the promotion of the reaction of oxidation of SO₂ to SO₃ is obtained by using strong electrolytes of any kind in such an amount to obtain ratios between the employed strong electrolyte moles and SO₂ + SO₃ moles ranging between 0.1 ang 5.0%.

9. Process according to claim 1 to 8, wherein in the vitrifiable powder mixture the percentage of combined SO₂ is maintained under 25% in weight by a treatment of oxidation of powders.

10. A process according to claims 1 to 9 wherein the Na₂SO₃ and NₐSO₂O₆ containing powders are reutilized as such in the preparation of the vitrifiable mixture in partial or total replacement of Na₂SO₄ therein present, whereby the reducing effect of tetravalent sulfur contained in recycling powders is compensated by appropriately decreasing the amount of the reducing components.

11. A process according to claim 1 to 10 wherein to facilitate transportation and recycling of the separated powders to the melting furnace, they are suspended in water and caustic soda.

12. A process according to claims 1 to 11, applied to waste gases obtained from melting furnaces for soda-lime glass by combustion of oil even at high sulfur concentration.

13. A process according to claims 1 to 11, applied to combustion plants of any industrial kind in which the waste gases must be submitted to abatment of pollutants present in the gases.
